# EUROPEAN PATENT SPECIFICATION

(11) **EP 1 281 674 B1**
(45) Date of publication and mention of the grant of the patent: **07.03.2007**
(21) Application number: 02011509.3
(22) Date of filing: 22.05.2002
(51) Int. Cl.: C02F 1/48

(54) **Bactericidal descaler for treating drinking water**
Bakterizider Entkalker zur Trinkwasseraufbereitung
Détartreur bactéricide pour le traitement de l'eau potable

(30) Priority: 02.08.2001 IT TV20010043
(43) Date of publication of application: 05.02.2003
(73) Proprietor: Tecnoacque Di Favarin Francesco & C. S.N.C., 35020 Due Carrare Loc. Carrara San Giorgio (Padova) (IT)
(72) Inventor: Favarin, Francesco, 35020 Due Carrare (Padova) (IT)
(74) Representative: Modiano, Micaela Nadia

(56) References cited:
- WO-A-98/52876
- DE-A- 3 632 257
- DE-A- 4 229 594
- DE-A- 19 857 731
- DE-U- 9 419 452
- DE-U- 29 506 467
- US-A- 5 645 697
- US-A- 5 670 041

## Description

The present invention relates to a bactericidal descaler for treating potable water, i.e. drinking water.

Devices are currently known which perform various water treatments, including devices whose function is to change the chemical-physical composition of the water, but with the aim of eliminating the deposition of scale in pipes, which can compromise their optimum heat exchange and thus increase energy consumption.

Accordingly, devices are known which need to premix the water that is used with salts, which vary the degree of hardness of the water, allowing a slight reduction in calcium salts.

Devices are also known which use chemical additives to achieve the same results; Italian Utility Model 229.250 by the same Applicant discloses a descaler, particularly for treating water used for heating and/or for sanitary applications, such descaler being constituted by an upper flange and a lower flange, which can be magnetized and can be detachably coupled one another with the interposition of one or more spacers so as to form a first annular seat for an electric coil and a separate second annular seat for conveying water from an inlet to an outlet arranged next to each other with the interposition of a flow diverter.

However, all this prior art technique only changes the chemical-physical composition of the water, which is a health detrimental operation in water that is instead designed for drinking, since the presence of calcium is a primary element for determining potability.

Moreover, in most cases such technique promotes bacterial proliferation, with a consequent risk of biological contamination of the pipes in the distribution system.

The risk of biological proliferation in the water treated by any of softeners to reverse osmosis to the normal mechanical or activated-carbon filters, is in fact very high, to the point that post-disinfection systems are at least recommended, if not legally mandatory.

The apparatus previously patented by the same Applicant also suffers the same drawback, although it has a toroidal coil supplied with direct current whose magnetic induction facilitates, in the mineral salts that are present in the water, a regular microcrystallization of calcium bicarbonate with respect to the irregular macrocrystallization that occurs with untreated water, once it has been heated or evaporated.

The aim of the present invention is to solve the above mentioned problems, eliminating the drawbacks of the cited prior art, by providing an apparatus for physical treatment of water suitable for drinking, that allows to achieve a considerable biological reduction.

Within this aim, an object of the invention is to provide an apparatus for the physical treatment of potable water, i.e. suitable for drinking, that decreases any biological risks in the water per se and any risks induced by the treatment used.

Another object is to obtain an apparatus for the physical treatment of water suitable for drinking that has no biological or other contraindication.

Another object is to provide an apparatus for the physical treatment of water suitable for drinking, that may be defined as having a bactericidal action, and which eliminates or reduces drastically the risk of bacterial proliferation in water thus treated and, accordingly, also in distribution networks, unlike the other known water treatment systems.

Another object is to obtain an apparatus that associates with the preceding characteristics that of having low overall and installation costs and which can be obtained with usual and known machines and equipment.

This aim and these and other objects that will become better apparent hereinafter are achieved by a bactericidal descaler, for the treatment of water used for drinking, as defined in claims 1 and 2.

Further characteristics and advantages of the present invention will become better apparent from the following detailed description of some particular but not exclusive embodiments thereof, illustrated only by way of non-limitative example in the accompanying drawings, wherein:

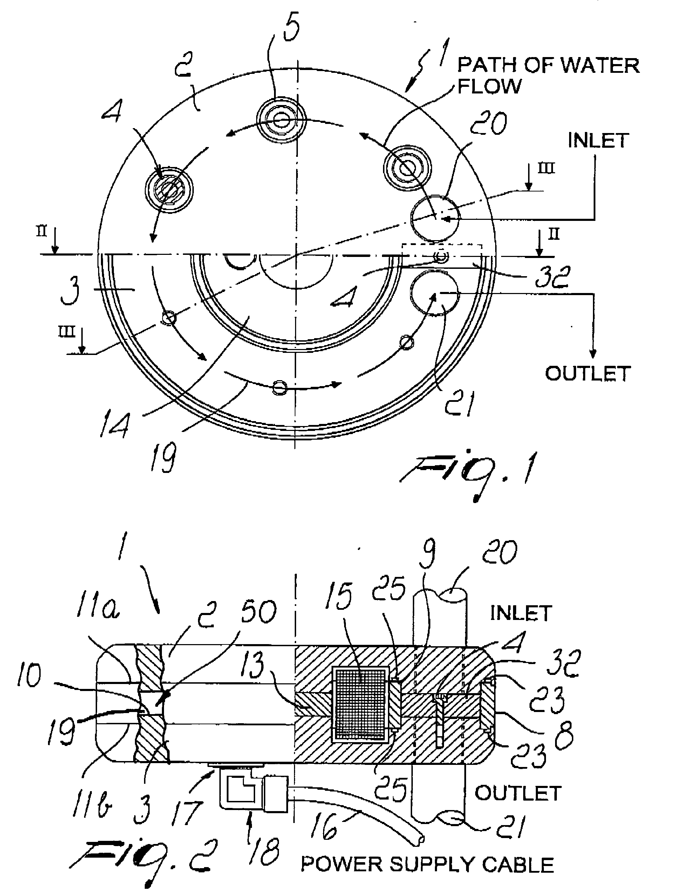

Figure 1 is a partially sectional plan view of the descaler;
Figure 2 is a sectional view of the descaler, taken along the line II-II of Figure 1;
Figure 3 is an exploded sectional view of the descaler, taken along the line III-III of Figure 1;
Figure 4 is a reproduction of a first photograph showing the effect of the electromagnetic field on fecal coliforms in river water (A untreated water, B treated water);
Figure 5 is a chart which plots the effect of the electromagnetic field on the total bacterial mass that is present in water of a well (A untreated water, B treated water);
Figure 6 is a reproduction of a second photograph showing the effect of the electromagnetic field on the bacterial mass in water of a well (A untreated water, B treated water);
Figure 7 is a reproduction of a third photograph showing the effect of the electromagnetic field on total coliforms in river water (A untreated water, B treated water);
Figure 8 is a chart comparing the results for plasma osmolarity in fish grown in water treated as provided by the invention and in fish grown in untreated water (A untreated water, B treated water);
Figure 9 is a chart comparing the cortisol levels found in the plasma of fish grown in water treated as provided by the present invention and in fish grown in untreated water (A untreated water, B treated water).

With reference to the figures, the reference numeral 1 designates the descaler, constituted by a first upper flange 2 and a second lower flange 3, which can be magnetized and detachably coupled one another by means of suitable screws 4, whose heads 5 can be positioned at suitable seats 6 formed on the upper flange 2 and whose stems are coupled at suitable complementarily threaded channels 7 formed in the lower flange 3.

The screws 4 are made of nonmagnetizable material, in order to avoid acting as a magnetic bridge, thus ensuring maximum induction between the space interposed between the walls of the induction chamber formed by the facing surfaces of the upper and lower flanges.

The upper flange 2 and the lower flange 3 can in fact be mutually superimposed, interposing a first outer spacer 8 and a second inner spacer 9, which are constituted by rings; the first spacer 8 has, on the outer lateral surface 10 and at the peripheral edges 11a and 11b, two recesses 12a and 12b, which form, for the first spacer 8, a T-shaped cross-section whose stem is directed outward.

A suitable magnetizable gap pad 13 can be arranged at the second spacer 9.

A first annular seat 14 for a coil 15 is formed between the upper flange 2 and the lower flange 3; the coil 15 is arranged concentrically, is made of copper and is supplied with electric power by means of a suitable cable 16, which can be connected thereto by means of a suitable power supply input 17 with a cable clamp 18.

Coaxially to the first seat 14 there is a second separate seat 19, which is also annular and is designed/shaped to convey water from an inlet 20 to an outlet 21 located close to each other, with a flow diverter 32 interposed between them.

The inlet 20 and the outlet 21 are therefore arranged laterally adjacent to each other, so as to force the water to follow a path of more than 300°.

In the present device, the surfaces of the water treatment chamber (50) have been modified and improved with respect to the previous device of the Applicant in order to achieve a lower inductive leakage outside the apparatus.

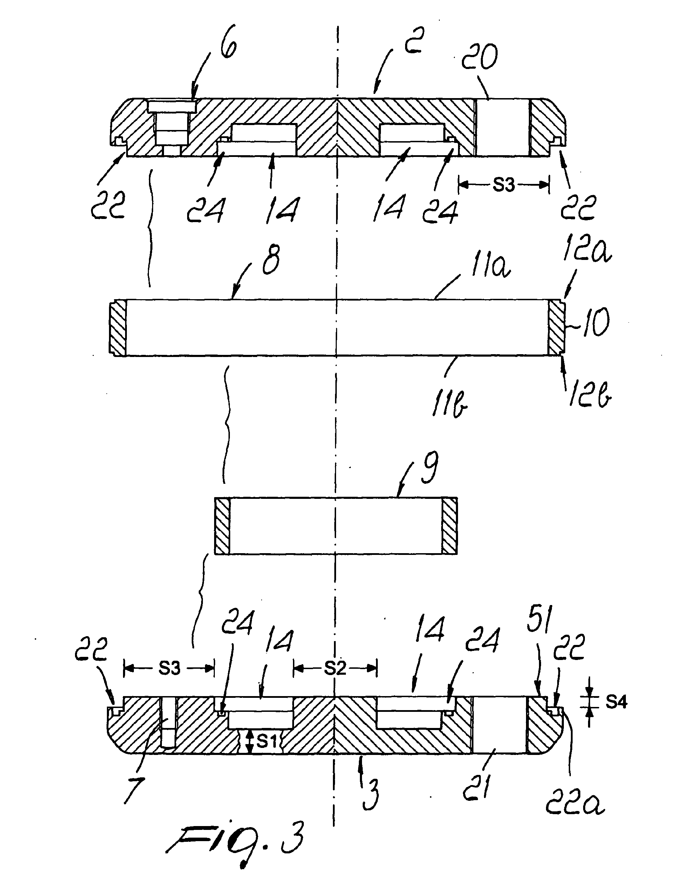

The modifications applied to the described device, with respect to the one to which the previous filing of the Applicant relates, concern first of all a different type of power supply of the coil 15 and a different and more balanced sizing of some structural parts, such as the use of a metallic core (gap pad 13) which has an increased cross-section thickness S1 in order to oppose less resistance to the magnetic conductivity of the field generated by the coil 15, thus reducing interference and internal leakage; advantageously, the ratio S1 = 30/100 S2 is defined, where S2 (see Figure 3) is the central cross-section extension of the upper flange 2 and lower flange 3.

Accordingly, as shown in Figure 3, the first spacer 8 has recesses 12a and 12b obtained internally and at the peripheral edges 11a and 11b on the outer lateral surface 10, so as to form, for the first spacer 8, a T-shaped cross-section in which the stem is directed outward; the recesses are matched by appropriate first recessed cross-section configurations 22 of the flanges (which are recessed, and therefore deeper, than the plane surface of the water treatment chamber 50 with respect to the previously patented device), which have a shape that forms, once the first and second flanges have been assembled, first annular cavities 23 for sealing elements which are arranged approximately at a location that is central with respect to the radial width of the first spacer 8.

Advantageously, the ratio S4 = 15/100 S2 is defined for said configurations 22, where S4 is the distance between the plane of arrangement of the facing surfaces of the upper and lower flanges and the abutment region of the recesses 12a and 12b of the first spacer 8. Likewise, at the second spacer 9 there are, on the first and second flanges, second annular recessed cross-section configurations 24, which are substantially identical to the first recessed cross-section configurations 22, so as to form second annular cavities 25.

This has allowed to have a better and uniform distribution of the field on the walls that compose the induction or treatment chamber 50 in contact with the water, since the spacing provided by material removal at the configurations 22 of the magnetizable peripheral edge parts 22a, which are assigned a mere sealing function instead of an induction function, from the surface 51 of the treatment chamber 50 has allowed to decrease, also in this peripheral region, the external leakage of the magnetic field, helping to concentrate it mainly on the walls of the treatment chamber in contact with the water.

Moreover, an increase of the cross-section distance S1 and of the radial distance S3 for transmission of the first and second flanges with respect to the device described in the document filed previously by the same Applicant in order to facilitate the passage of the field inside said material, reducing its external leakage and conveying the magnetic flux more into the region of the walls that constitute the treatment chamber 50.

Advantageously, the ratio S3 = 113/100 S2 is defined.

The use of a flow diverter 32 whose plan shape is substantially rectangular has allowed to improve the water contact time in the treatment chamber with respect to the preceding device filed by the Applicant where a cylindrical flow diverter was provided.

Finally, it is noted that an electric power supply has been selected which has a particular range of currents, power levels and supply frequencies of the coil: by way of example, some results obtained by using the following parameters are given:
- with a square-wave AC voltage of 10 to 300 volts, and with frequencies of 2 to 60 Hz;
- with a half-wave rectified voltage of 10 to 30 volts, with frequencies of 40 to 60 Hz, and with field strengths of 200 to 800 gauss at the center of the treatment chamber.

Tests were conducted, using these values, at Institutes which performed test sessions in which the effects on the bacterial load of well water and on fecal coliforms and total coliforms on river water were checked.

The chemical-physical characteristics of the treated water (hardness, electrical conductivity, temperature and pH) were also checked, revealing no change.

Weekly samples of treated and untreated (reference) water were taken during the same test session for approximately 3 months, performing the corresponding microbiological tests.

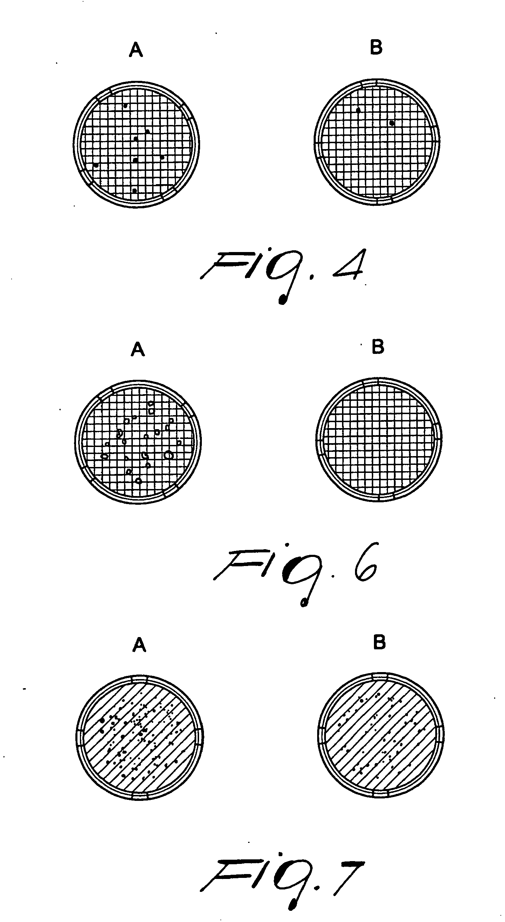

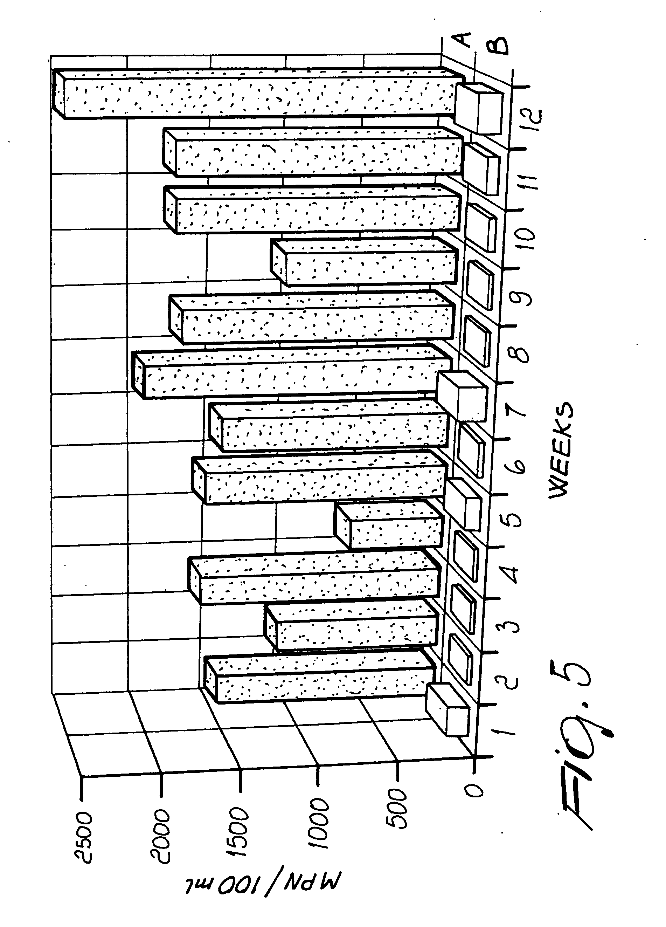

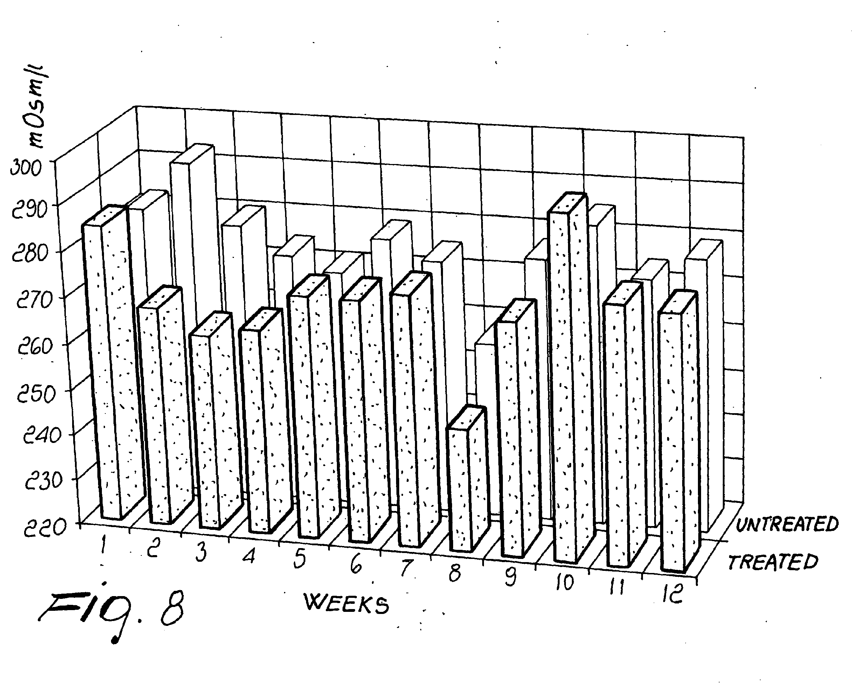

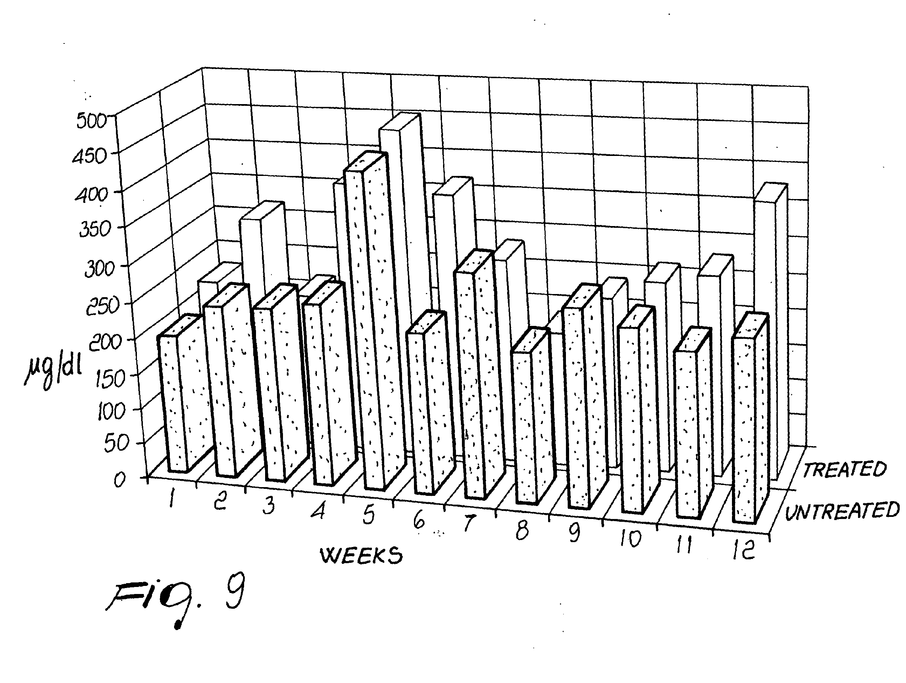

The results of this test session are shown in Figures 4, 6 and 7 and in the charts of Figures 5, 8 and 9.

It has been observed that the invention has achieved the intended aim and objects, an apparatus for the physical treatment of water suitable for drinking having been devised which allows to achieve a considerable biological reduction, reducing any biological risks both in the water per se and any risks induced by the treatment that is used, since the invention has no biological or other contraindication.

Moreover, the present invention allows to define its action as bactericidal, eliminating or reducing drastically the risk of bacterial proliferation in water thus treated and accordingly also in distribution networks.

The invention is of course susceptible of numerous modifications and variations, all of which are within the scope of the appended claims.

The materials and the dimensions that constitute the individual components of the invention may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bactericidal descaler for the treatment of water used for drinking, comprising an upper flange (2) and a lower flange (3), which can be magnetized and mutually coupled detachably by way of suitable screws (4) and can be mutually superimposed with the interposition of a first spacer (8) and a second spacer (9), constituted by rings; a first annular seat (14) being formed between said upper flange (2) and said lower flange (3), said first seat (14) being shaped so as to accommodate a coil (15) which is arranged concentrically thereto, the descaler further comprising a second annular seat (19) defining a water treatment chamber (50), which is coaxial to said first seat (14), for conveying water from an inlet (20) to an outlet (21) arranged mutually adjacent with a flow diverter (32) interposed, **characterized in that** said coil (15) is connected to a power supply that is suitable to supply AC electric power with a square-wave voltage of 10 to 300 volts at frequencies of 2 to 60 Hz.

2. A bactericidal descaler for the treatment of water used for drinking, comprising an upper flange (2) and a lower flange (3), which can be magnetized and mutually coupled detachably by way of suitable screws (4) and can be mutually superimposed with the interposition of a first spacer (8) and a second spacer (9), constituted by rings; a first annular seat (14) being formed between said upper flange (2) and said lower flange (3), said first seat (14) being shaped so as to accommodate a coil (15) which is arranged concentrically thereto, the descaler further comprising a second annular seat (19) defining a water treatment chamber (50), which is coaxial to said first seat (14), for conveying water from an inlet (20) to an outlet (21) arranged mutually adjacent with a flow diverter (32) interposed, **characterized in that** said coil (15) is connected to a power supply that is suitable to supply electric power with a half-wave rectified voltage of 10 to 30 volts, at frequencies of 40 to 60 Hz, and with a field strength of 200 to 800 gauss at the center of the treatment chamber (50).

3. The descaler according to one or more of the preceding claims, **characterized in that** said flow diverter (32) has, in plan view, a rectangular shape in order to improve water contact time in the treatment chamber (50).

4. The descaler according to one or more of the preceding claims, **characterized in that** it comprises a metallic core (13) having a cross-section thickness S1 defined by the ratio S1 = 30/100 S2, where S2 is the central cross-section extension of said upper (2) and lower (3) flanges, in order to oppose less resistance to the magnetic conductivity of the field generated by said coil (15), thus reducing interference and internal leakage.

5. The descaler according to one or more of the preceding claims, **characterized in that** said first spacer (8) has recesses (12a,12b) obtained internally and at the perimetric edges (11a, 11b) on the outer lateral surface (10), so as to form a T-shaped cross-section with the stem directed outward.

6. The descaler according to one or more of the preceding claims, **characterized in that** said screws (4) are made of nonmagnetizable material, in order to avoid acting thereof as a magnetic bridge, to therefore ensure maximum induction in the space between the walls of the treatment chamber (50) formed by the facing surfaces of the upper (2) and lower (3) flanges.

7. The descaler according to claim 5, **characterized in that** said recesses (12a, 12b) are matched by suitable first recessed cross-section configurations (22) of said flanges (2,3) which have a shape that forms, once said first (2) and second (3) flanges are assembled, first annular cavities (23) for sealing elements, which are arranged approximately at a central location of the radial width of said first spacer (8), said cross-section configurations (22) advantageously being provided at a distance S4 from the facing surface of the respective flange (2,3) having the ratio S4 = 15/100 S2.

8. The device according to claims 1 or 2 and 7, **characterized in that** at said second spacer (9), on said first (2) and second (3) flanges, second annular recessed cross-section configurations (24) are provided, which are substantially identical to said first cross-section configurations (22) so as to form second annular cavities (25) in order to allow better and uniform distribution of the field on the walls that compose the treatment chamber (50) in contact with the water, and **in that** the spacing from the surface of the treatment chamber (50) provided by material removal at the first configurations (22) of the magnetizable perimetric edge parts (22a), which are given a merely sealing function instead of an induction function, allows to decrease in the perimetric region also the external leakage of the field, helping to concentrate the field mainly on the walls of the treatment chamber (50) in contact with the water.

9. The descaler according to one or more of the preceding claims, **characterized in that** it has a field transmission cross-section distance S 1 and radial distance S3 of said first (2) and second (3) flanges that is increased in order to facilitate the passage of the field inside said material, reducing external leakage thereof and conveying the magnetic flux more in the wall region of the treatment chamber (50), advantageously providing the distance ratio S3 =113/100 S2.

## Patentansprüche

1. Ein bakterizider Entkalker zur Trinkwasseraufbereitung, einen oberen Flansch (2) und einen unteren Flansch (3) umfassend, die magnetisiert werden und mittels geeigneter Schrauben (4) lösbar miteinander verbunden werden können und die mit der Einfügung eines ersten Distanzstücks (8) und eines zweiten Distanzstücks (9), die als Ringe ausgebildet sind, übereinander gelagert werden können; wobei ein erster ringförmiger Sitz (14) zwischen dem oberen Flansch (2) und dem unteren Flansch (3) ausgebildet ist, wobei der erste Sitz (14) geformt ist, um eine Spule (15) aufzunehmen, die dazu konzentrisch angeordnet ist, wobei der Entkalker weiter einen zweiten ringförmigen Sitz (19) umfasst, der eine Wasseraufbereitungskammer (50) bestimmt, die koaxial zum ersten Sitz (14) liegt, um Wasser von einem Einlass (20) zu einem Auslass (21) zu befördern, die nebeneinander mit einem dazwischenliegenden Durchflussumleiter (32) angeordnet sind, **dadurch gekennzeichnet, dass** die Spule (15) an eine Stromversorgung angeschlossen ist, die geeignet ist, einen elektrischen Wechselstrom mit einer Rechteckspannung von 10 bis 300 Volt mit Frequenzen von 2 bis 60 Hz zu liefern.

2. Ein bakterizider Entkalker zur Trinkwasseraufbereitung, einen oberen Flansch (2) und einen unteren Flansch (3) umfassend, die magnetisiert werden und mittels geeigneter Schrauben (4) lösbar miteinander verbunden werden können und die mit der Einfügung eines ersten Distanzstücks (8) und eines zweiten Distanzstücks (9), die als Ringe ausgebildet sind, übereinander gelagert werden können; wobei ein erster ringförmiger Sitz (14) zwischen dem oberen Flansch (2) und dem unteren Flansch (3) ausgebildet ist, wobei der erste Sitz (14) geformt ist, um eine Spule (15) aufzunehmen, die dazu konzentrisch angeordnet ist, wobei der Entkalker weiter einen zweiten ringförmigen Sitz (19) umfasst, der eine Wasseraufbereitungskammer (50) bestimmt, die koaxial zum ersten Sitz (14) liegt, um Wasser von einem Einlass (20) zu einem Auslass (21) zu befördern, die nebeneinander mit einem dazwischenliegenden Durchflussumleiter (32) angeordnet sind, **dadurch gekennzeichnet, dass** die Spule (15) an eine Stromversorgung angeschlossen ist, die geeignet ist, einen elektrischen Strom mit einer einweggleichgerichteten Spannung von 10 bis 30 Volt mit Frequenzen von 40 bis 60 Hz und einer Feldstärke von 200 bis 800 Gauss in der Mitte der Aufbereitungskammer (50) zu liefern.

3. Der Entkalker gemäß einem oder mehreren der vorhergehenden Ansprüche, **dadurch gekennzeichnet, dass** der Durchflussumleiter (32) im Grundriss eine rechteckige Form aufweist, um die Wasserkontaktzeit in der Aufbereitungskammer (50) zu verbessern.

4. Der Entkalker gemäß einem oder mehreren der vorhergehenden Ansprüche, **dadurch gekennzeichnet, dass** er einen metallischen Kern (13) umfasst, der eine Querschnittsdicke S1 aufweist, die als Verhältnis S1 = 30/100 S2 definiert ist, worin S2 die zentrale Querschnittsausdehnung des oberen (2) und des unteren (3) Flansches ist, um der magnetischen Leitfähigkeit des von der Spule (15) erzeugten Feldes geringeren Widerstand entgegenzusetzen, wodurch Interferenzen und interne Streuung reduziert werden.

5. Der Entkalker gemäß einem oder mehreren der vorhergehenden Ansprüche, **dadurch gekennzeichnet, dass** das erste Distanzstück (8) intern und an den perimetrischen Kanten (11a, 11b) auf der äußeren lateralen Oberfläche (10) Aussparungen (12a, 12b) erhalten hat, um so einen T-förmigen Querschnitt mit nach außen gerichtetem Stamm zu bilden.

6. Der Entkalker gemäß einem oder mehreren der vorhergehenden Ansprüche, **dadurch gekennzeichnet, dass** die Schrauben (4) aus nicht magnetischem Material hergestellt sind, um deren Wirkung als magnetische Brücke zu vermeiden, um so eine maximale Induktion in den Raum zwischen den Wänden der Aufbereitungskammer (50), der von den sich gegenüberstehenden Oberflächen des oberen (2) und des unteren (3) Flansches gebildet wird, sicherzustellen.

7. Der Entkalker gemäß Anspruch 5, **dadurch gekennzeichnet, dass** die Aussparungen (12a, 12b) mit geeigneten ersten ausgesparten Querschnittskonfigurationen (22) der Flansche (2, 3) zusammenpassen, die eine Form aufweisen, die, sobald der erste (2) und zweite (3) Flansch zusammengesetzt sind, erste ringförmige Hohlräume (23) für Dichtungselemente bilden, die ungefähr an einer zentralen Stelle der radialen Breite des ersten Distanzstücks (8) angeordnet sind, wobei die Querschnittskonfigurationen (22) vorteilhafterweise mit einer Distanz S4 von der zugewandten Oberfläche des entsprechenden Flanschs (2, 3) bereitgestellt werden, mit dem Verhältnis S4 = 15/100 S2.

8. Die Vorrichtung gemäß Anspruch 1 oder 2 und 7, **dadurch gekennzeichnet, dass** am zweiten Distanzstück (9), am ersten (2) und am zweiten (3) Flansch zweite ringförmige ausgesparte Querschnittskonfigurationen (24) bereitgestellt sind, die im Wesentlichen identisch mit den ersten Querschnittskonfigurationen (22) sind, um so zweite ringförmige Hohlräume (25) zu bilden, um eine bessere und gleichförmige Verteilung des Feldes an den Wänden, welche die mit dem Wasser in Kontakt stehende Aufbereitungskammer (50) bilden, zu gestatten, und **dadurch**, dass der Abstand von der Oberfläche der Aufbereitungskammer (50), hergestellt durch Materialentfernung an den ersten Konfigurationen (22) der magnetisierbaren, perimetrischen Kantenteile (22a), welchen lediglich eine Dichtungsfunktion anstatt einer Induktionsfunktion zugewiesen ist, es ermöglicht, in dem perimetrischen Bereich auch den externen Verlust des Feldes zu reduzieren, was dazu beiträgt, das Feld hauptsächlich an den Wänden der mit dem Wasser in Kontakt stehenden Aufbereitungskammer (50) zu konzentrieren.

9. Der Entkalker gemäß einem oder mehreren der vorhergehenden Ansprüche, **dadurch gekennzeichnet, dass** er eine Feldübertragungsquerschnittsdistanz S1 und eine radiale Distanz S3 des ersten (2) und zweiten (3) Flansches aufweist, die vergrößert wird, um das Hindurchdringen des Feldes im Material zu erleichtern, externen Verlust davon zu reduzieren und den magnetischen Fluss mehr in den Wandbereich der Aufbereitungskammer (50) zu befördern, wobei vorteilhafterweise das Distanzverhältnis S3 = 113/100 S2 geliefert wird.

## Revendications

1. Détartreur bactéricide pour le traitement des eaux potables, comprenant une bride supérieure (2) et une bride inférieure (3), qui peuvent être magnétisées et mutuellement couplées de façon détachable au moyen de vis (4) appropriées et peuvent être mutuellement superposées par l'interposition d'un premier séparateur (8) et d'un second séparateur (9), constitués par des anneaux; un premier siège annulaire (14) étant formé entre ladite bride supérieure (2) et ladite bride inférieure (3), ledit premier siège (14) étant conformé de façon à loger une bobine (15) qui est agencée concentriquement à celui-ci, le détartreur comprenant en outre un deuxième siège annulaire (19) définissant une chambre (50) de traitement de l'eau, qui est coaxiale audit premier siège (14), pour acheminer l'eau d'une entrée (20) à une sortie (21) agencées mutuellement adjacentes avec un dériveur de flux (32) interposé, **caractérisé en ce que** ladite bobine (15) est connectée à une alimentation d'énergie qui est appropriée pour alimenter en énergie électrique AC avec un voltage à onde carrée de 10 à 300 volts à des fréquences de 2 à 60 Hz.

2. Détartreur bactéricide pour le traitement des eaux potables, comprenant une bride supérieure (2) et une bride inférieure (3), qui peuvent être magnétisées et mutuellement couplées de façon détachable au moyen de vis (4) appropriées et peuvent être mutuellement superposées par l'interposition d'un premier séparateur (8) et d'un second séparateur (9), constitués par des anneaux; un premier siège annulaire (14) étant formé entre ladite bride supérieure (2) et ladite bride inférieure (3), ledit premier siège (14) étant conformé de façon à loger une bobine (15) qui est agencée concentriquement à celui-ci, le détartreur comprenant en outre un deuxième siège annulaire (19) définissant une chambre (50) de traitement de l'eau, qui est coaxiale audit premier siège (14), pour acheminer l'eau d'une entrée (20) à une sortie (21) agencées mutuellement adjacentes avec un dériveur de flux (32) interposé, **caractérisé en ce que** ladite bobine (15) est connectée à une alimentation d'énergie qui est appropriée pour alimenter en énergie électrique avec un voltage rectifié à demi-onde de 10 à 30 volts, à des fréquences de 40 à 60 Hz, et avec une force de champ de 200 à 800 gauss au centre de la chambre de traitement (50).

3. Détartreur selon une ou plusieurs des revendications précédentes, **caractérisé en ce que** le dériveur de flux (32) présente, en vue de plan, une forme rectangulaire afin d'améliorer le temps de contact de l'eau dans la chambre de traitement (50).

4. Détartreur selon une ou plusieurs des revendications précédentes, **caractérisé en ce qu'**il comprend un noyau métallique (13) ayant une épaisseur de section S1 définie par le rapport S1 = 30/100 S2, où S2 est l'extension de section centrale desdites brides supérieure (2) et inférieure (3), afin d'opposer moins de résistance à la conductivité magnétique du champ généré par ladite bobine (15), réduisant ainsi interférences et dispersions internes.

5. Détartreur selon une ou plusieurs des revendications précédentes, **caractérisé en ce que** ledit premier séparateur (8) présente des évidements (12a, 12b) obtenus intérieurement et au niveau des bords périmétriques (11a, 11b) sur la surface latérale externe (10), de façon à forme une section en T avec la tige dirigée vers l'extérieur.

6. Détartreur selon une ou plusieurs des revendications précédentes, **caractérisé en ce que** lesdites vis (4) sont réalisées en un matériau ne pouvant être magnétisé, afin d'éviter qu'elles agissent comme un pont magnétique, pour ainsi assurer une induction maximum dans l'espace entre les parois de la chambre de traitement (50) formées par les surfaces frontales des brides supérieure (2) et inférieure (3).

7. Détartreur selon une ou plusieurs des revendications précédentes, **caractérisé en ce que** lesdits évidements (12a, 12b) correspondent à des premières configurations à sections évidées appropriées (22) desdites brides (2, 3) qui présentent une conformation qui forme, une fois lesdites première (2) et deuxième (3) brides assemblées, des premières cavités annulaires (23) pour des éléments d'étanchéité, qui sont agencées à proximité d'un point central de la largeur radiale dudit premier séparateur (8), lesdites configurations à sections étant avantageusement prévues à une distance S4 de la surface frontale de la bride respective (2, 3) ayant le rapport S4 = 15/100 S2.

8. Dispositif selon les revendications 1 ou 2 et 7, **caractérisé en ce que**, au niveau du deuxième séparateur (9), sur lesdites première (2) et deuxième (3) brides, des deuxièmes configurations annulaires à section évidée (24) sont prévues, sensiblement identiques auxdites premières configurations à sections (22) de façon à former des deuxièmes cavités annulaires (25) afin de permettre une distribution uniforme et meilleure du champ sur les parois qui composent la chambre de traitement (50) en contact avec l'eau, et **en ce que** l'espacement de la surface de la chambre de traitement (50) fourni par l'enlèvement de matériau au niveau des premières configurations (22) des parties de bord périmétrique pouvant être magnétisé (22a), qui présentent une pure fonction d'étanchéité au lieu d'une fonction d'induction, permet de diminuer dans la région périmétrique également les dispersions externes du champ, aidant à concentrer le champ principalement sur les parois de la chambre de traitement (50) en contact avec l'eau.

9. Détartreur selon une ou plusieurs des revendications précédentes, **caractérisé en ce qu'**il présente une distance S1 de section de transmission de champ et une distance radiale S3 desdites première (2) et deuxième (3) brides qui est augmentée afin de faciliter le passage du champ dans ledit matériau, réduisant la dispersion externe du champ et acheminant le flux magnétique davantage dans la région de paroi de la chambre de traitement (50), en prévoyant avantageusement le rapport de distance S3 = 113/100 S2.
